# EUROPÄISCHE PATENTANMELDUNG

(11) **EP 3 599 567 A1**
(43) Veröffentlichungstag der Anmeldung: **29.01.2020**
(21) Anmeldenummer: 18185597.4
(22) Anmeldetag: 25.07.2018
(51) Int. Cl.: G06F 21/57

(54) **VORRICHTUNG UND VERFAHREN FÜR EINE INTEGRITÄTSÜBERPRÜFUNG EINER ODER MEHRERER GERÄTEKOMPONENTEN**

(71) Anmelder: Siemens Aktiengesellschaft, 80333 München (DE)
(72) Erfinder: Falk, Rainer, 85586 Poing (DE); Feist, Christian Peter, 80689 München (DE)

(57) **Zusammenfassung**

Die Erfindung beansprucht eine Vorrichtung (DS; IC) für eine Integritätsüberprüfung einer oder mehrerer Gerätekomponenten, welche an ein insbesondere in einer industriellen Automatisierungsumgebung verwendbares Gerät (D) integriert oder lösbar gekoppelt sind, aufweisend:
- eine Prüfeinheit (CS), die dazu ausgelegt ist, während einer geschützten ersten Betriebsphase des Gerätes zumindest eine kryptographisch geschützte Integritätsattestierungsinformation (SB Att; RH Att) zu prüfen, welche jeweils von der einen oder mehreren Gerätekomponenten während derer geschützten Betriebsphasen erstellt und/oder initiiert ist,
und
- eine Überwachungseinheit (ICH), die dazu ausgelegt ist, bei positiven Prüfungsergebnis eine weitere Betriebsphase des Geräts einzuleiten.

## Beschreibung

Die Erfindung betrifft eine Vorrichtung und ein Verfahren für eine Integritätsüberprüfung einer oder mehrerer Gerätekomponenten, welche in ein insbesondere in einer industriellen Automatisierungsumgebung verwendbares Gerät integriert oder lösbar gekoppelt sind.

Es besteht ein Bedarf, um mit IT-Security-Mechanismen Produkte, beispielsweise Geräte (z.B. Steuergeräte, Internet-der-Dinge (IoT)-Geräte), Gerätekomponenten oder Softwarekomponenten, vor Manipulationen und/oder einem Reverse Engineering zu schützen. Kryptographische IT-Security-Mechanismen sind bereits beispielsweise in Smart Devices, beispielsweise in Geräten des Internets der Dinge (IoT), von cyberphysikalischen Systemen, von Automatisierungssystemen der Energietechnik oder von Fertigungssystemen, der Betriebstechnik und von anderen Anlagen in Einsatz.

Der Begriff "Security" bzw. "Sicherheit" bezieht sich im Rahmen der vorliegenden Beschreibung im Wesentlichen auf die Sicherheit bzw. Schutz, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen ausgeführt werden.

Manipulationsgeschützt geht in der vorliegenden Beschreibung über den Begriff "Security" hinaus. Hierbei werden nicht nur die genannten kryptographischen bzw. Security-Methoden eingesetzt, sondern auch die Datenübertragung verlässlich gegen Angriffe bzw. Fremdzugriffe von außen sichergestellt.

Industrielle Geräte, z.B. Steuergeräte, Feldgeräte, IoT-Geräte oder IoT-Gateways, verwenden eine Mehrzahl von kryptographischen Schlüsseln, z.B. um sich zu authentisieren, um Integrität von gespeicherten Daten und Programmcode zu schützen, um Firmware-Updates zu prüfen und zu entschlüsseln und um die Integrität und ggf. die Vertraulichkeit von Projektierungs- und Konfigurationsdaten zu schützen. Um Daten, vor allem Steuerdaten zu übertragen können die genannten Geräte mit einer Datenschnittstelle ausgestattet sein, die drahtgebunden als auch als Drahtlos-Schnittstelle, z.B. eine WLAN-, eine Bluetooth- oder eine NFC-Schnittstelle (NFC: Near Field Communication) ausgebildet und eingerichtet sein kann. Mit Hilfe dieser Datenschnittstelle kann das Gerät an ein Netzwerk angebunden werden bzw. mit anderen Geräten kommunizieren.

Es sind weitere drahtlose bzw. funkbasierte Übertragungstechniken hierbei einsetzbar (z.B. Safety over WLAN wie z.B. ProfiSafe, WiMax, Cloud Robotics, GSM, UMTS, LTE, 5G, Vehicle-2-X-Communication für autonome Fahrzeuge bzw. autonomes Fahren, funkbasierte Zugsicherung ETCS). Auch kann funkbasiert eine Positionsinformationen (PVT: position, velocity, time) über ein Satellitennavigationssystem (GPS, Galileo, Beidou, Glonass) empfangen werden, die für eine Steuerungsfunktion des Geräts verwendet wird.

Die Integrität von Systemen, insbesondere von industriellen Automatisierungssystemen und von Geräten mit mehreren (Geräte-)Komponenten (z.B.: IO-Modul, CPU-Module,...) ist ein wesentliches Schutzziel. Angenommen, beispielsweise die Firmware/Software eines Steuergerätes ist integer, dann könnte dennoch die richtige Ausführung von Steueraufgaben durch eine verbundene, kompromittierte Komponente (z.B. ein kompromittierter Sensor) beeinträchtigt werden. Es besteht daher der Bedarf einer Lösung zur Sicherstellung bzw. Überprüfung der Integrität (und Authentizität) nicht nur eines einzelnen Gerätes, sondern auch von dessen zusätzlichen Komponenten.

Es ist möglich, Device Health Check ("Gesundheitsprüfung" eines Gerätes) Informationen von einzelnen Geräten zu sammeln und auf einem übergeordneten Server auszuwerten. Hierbei können technische Systeme, die aus mehreren Geräten bestehen, überwacht werden. Jedoch sind in den verwendeten Device Health Check Daten nur Informationen zu den einzelnen Geräten enthalten, nicht zu dessen zusätzliche Komponenten (z.B. Sensoren, Erweiterungsmodule).

Es sind Methoden und Ansätze für das Verifizieren von Firmware auf Netzwerkkarten bekannt (https://www.ssi.gouv.fr/uploads/IMG/pdf/Duflot-Perez runtime-firmware-integrity-verification.pdf). Hierbei wird ein Ansatz verfolgt, um die Firmware einer Netzwerkkarte entweder beim Laden der Firmware oder zu einem späteren Zeitpunkt zu überprüfen. Der beschriebene Mechanismus beschränkt sich jedoch auf das Überprüfen einer Komponente, welche nicht in der Lage ist, selbstständig einen gesicherten Startvorgang (Secure Boot) oder eine Attestierung beim Startvorgang (Measured Boot) durchzuführen.

Es ist Aufgabe der vorliegenden Erfindung, Verfahren und Vor- bzw. Einrichtungen bzw. Einheiten zur Integritätsprüfung deren Komponenten gegenüber dem oben genannten Stand der Technik insbesondere im Umfeld der Automatisierung zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht eine Vorrichtung für eine Integritätsüberprüfung einer oder mehrerer Gerätekomponenten, welche an ein insbesondere in einer industriellen Automatisierungsumgebung verwendbares Gerät integriert oder lösbar gekoppelt sind, aufweisend:
- eine Prüfeinheit, die dazu ausgelegt ist, während einer geschützten ersten Betriebsphase des Gerätes zumindest eine kryptographisch geschützte Integritätsattestierungsinformation zu prüfen, welche jeweils von der einen oder mehreren Gerätekomponenten während derer geschützten Betriebsphasen erstellt und/oder initiiert ist,
   und
- eine Überwachungseinheit, die dazu ausgelegt ist, bei positiven Prüfungsergebnis eine weitere Betriebsphase des Geräts einzuleiten.

Einleiten einer weiteren Betriebsphase bedeutet, dass die weitere Betriebsphase des Gerätes aktiviert und/oder freigegeben wird.

Die Prüfeinheit und Überwachungseinheit können in eine Einheit integriert sein. Die oben genannte Vorrichtung ist mit mehreren Gerätekomponenten (lösbar) gekoppelt bzw. koppelbar. Dabei kann es sich um ein Gerät handeln, das intern innerhalb eines Gerätegehäuses mehrere Gerätekomponenten, z.B. Smart-Sensors, Kommunikationsbausteine umfasst. Es kann sich ebenso um ein modular aufgebautes Gerät handeln, bei dem Erweiterungsmodule ansteckbar bzw. einsteckbar sind (z.B. ein PC mit eingesteckter PCIe-Erweiterungskarte, z.B. einem Hardware Security Module (HSM), eine Steuerung mit angestecktem IO-Modul). Ein sogenanntes Secure Element oder Kryptocontroller können die Integritätsattestierungsinformation prüfen und/oder attestieren. Die Integritätsüberprüfung mehrerer Komponenten ist positiv, wenn sich die Gerätekomponenten jeweils in einer regulären Betriebsphase befinden und damit jeweils ihre Integritätsattestierungsinformation erstellen und bereitstellen und/oder initiieren."Initiieren" bedeutet in diesem Zusammenhang, dass die Integritätsattestierungsinformation von einer dritten Stelle erstellt und bereitgestellt wird. Wenn das Prüfungsergebnis negativ ist, kann eine Alarmnachricht, ein Neustart, ein Löschen von Daten, ein Leuchten einer Diode und/oder ein Herstellen einer Schaltverbindung für eine Folgemaßnahme eingeleitet werden.

Die geschützte Betriebsphase kann während einer Startphase des Geräts ablaufen. Sie kann alternativ oder zudem während einer regulären Betriebsphase des Geräts ablaufen.
Ein Ablaufen der geschützten Betriebsphase während einer regulären Betriebsphase bedeutet, dass die reguläre Betriebsphase temporär unterbrochen wird, um die geschützte Betriebsphase temporär zu aktivieren. Das Aktivieren kann auf Nutzeranforderung (z.B. durch Knopfdruck), zeitgesteuert (z.B. täglich oder stündlich), oder ereignisgesteuert (z.B. abhängig von erfassten Sensorwerten des überwachten/gesteuerten technischen Systems, bei Aktualisieren einer Firmware, bei einem Pufferüberlauf, bei niedriger CPU-Last) erfolgen.

Es kann eine Steuerungsfunktion und/oder eine Ein-/Ausgabeschnittstelle freigegeben oder gestartet oder aktiviert sein oder werden, wenn die Vorrichtung in einem weiteren Betriebszustand in Betrieb ist, welcher einen regulären, in der Regel operativen, Betriebszustand repräsentiert.

Der Schutz der geschützten Betriebsphase kann durch Beschränkungen (z.B. Netzwerkschnittstelle zuerst noch deaktiviert, erst später wird sie aktiviert) erreicht werden.

Die Integritätsattestierungsinformation kann unter Verwendung eines Trusted Platform Module (TMP) oder eines Secure Elements ermittelt und/oder erstellt und kryptographisch geschützt werden.

Ein Aspekt der Erfindung ist eine Integritätsüberprüfungseinheit für eine Gerätekomponente, welche an ein insbesondere in einer industriellen Automatisierungsumgebung verwendbares Gerät integriert oder lösbar gekoppelt ist, dadurch gekennzeichnet, dass diese dazu ausgelegt ist, während einer geschützten Betriebsphase eine kryptographisch geschützte Integritätsattestierungsinformation zu erstellen und/oder zu initiieren, und diese dem Gerät zur Integritätsprüfung bereitzustellen bzw. zuzusenden.

Die Integritätsattestierungsinformation kann dabei zeit- und/oder ereignisgesteuert ermittelt und/oder erstellt werden.

Die Integritätsüberprüfungseinheit einer Gerätekomponente stellt eine Integritätsattestierungsinformation bereit. Diese bestätigt, dass die entsprechende Gerätekomponente selbst eine Startphase (erste Betriebsphase) erfolgreich durchgeführt hat und sich nun in einer regulären Betriebsphase (weitere Betriebsphase) befindet. Zudem hat vorzugsweise eine Laufzeitintegritätsüberprüfung die Gerätekomponente zur Laufzeit auf Integrität erfolgreich überprüft.

Ein weiterer Aspekt der Erfindung ist ein Verfahren zur Integritätsüberprüfung einer oder mehreren Gerätekomponenten, welche an ein insbesondere in einer industriellen Automatisierungsumgebung verwendbares Gerät integriert oder lösbar gekoppelt sind, aufweisend folgende Schritte:
- Prüfen zumindest einer kryptographisch geschützten Integritätsattestierungsinformation während einer geschützten ersten Betriebsphase des Gerätes, wobei die Integritätsattestierungsinformation jeweils von der einen oder mehreren Gerätekomponenten während derer geschützten Betriebsphasen erstellt und/oder initiiert wird,
   und
- Einleiten einer weiteren Betriebsphase des Geräts bei positivem Prüfungsergebnis.

Die genannten Schritte können wiederholt werden, wenn das Gerät in der weiteren Betriebsphase in Betrieb ist. Die Wiederholung der Schritte kann zeit- und/oder ereignisgesteuert ausgelöst werden.

Die Erfindung zeichnet sich dadurch aus, dass ein besonders hoher Schutz erreicht wird. Es wird bei einer Startphase und vorzugsweise wiederholt zur Laufzeit die Konfiguration mehrerer Gerätekomponenten eines Geräts geprüft. Dadurch wird erreicht, dass ein Gerät aus mehreren Gerätekomponenten nur dann in eine regulären Betriebsphase übergeht, wenn alle Gerätekomponenten des Geräts sich in einem integren Zustand befinden.

Die Prüfung kann als Kombination von "Measured Boot" und "Secure Boot" realisiert werden: Ein Secure Boot eines Hauptsystems ist dann nur erfolgreich, wenn eine gültige "Secure Boot Attestierungsinformation" bzw. eine zulässige TPM-artige Measured-Boot-Attestierung von Gerätekomponenten vorliegt.

Des Weiteren wird ein Computerprogramm(produkt) umfassend Programm-Code, der von mindestens einem Prozessor ausgeführt werden kann und der bewirkt, dass der mindestens eine Prozessor das erfindungsgemäße Verfahren und dessen Ausführungsformen ausführt. Das Computerprogramm kann auf einer der Vorrichtungen der vorstehend genannten Art ablaufen oder als Computerprogrammprodukt auf einem computerlesbaren Medium gespeichert sein.

Zusätzlich kann eine Variante des Computerprogramm(produktes) mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine sein.

Die Integritätsüberprüfungseinheit, das Verfahren und Computerprogramm(produkte) können entsprechend der Weiterbildungen/Ausführungsformen der vorgenannten Vorrichtung und derer Weiterbildungen/Ausführungsformen ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
- Die Figur 1: eine Vorrichtung DS beispielsweise ein Steuergerät D - wie es in einer industriellen Automatisierungsumgebung verwendbar ist,
- die Figur 2: die Vorrichtung in einer Ausführungsform für eine Laufzeitintegritätsüberprüfung, und
- die Figur 3: ein erfindungsgemäßes Beispiel, bei dem ein Boot-Loader mehrere Stufen einer Betriebsphase abhängig vom Prüfergebnis starten kann.

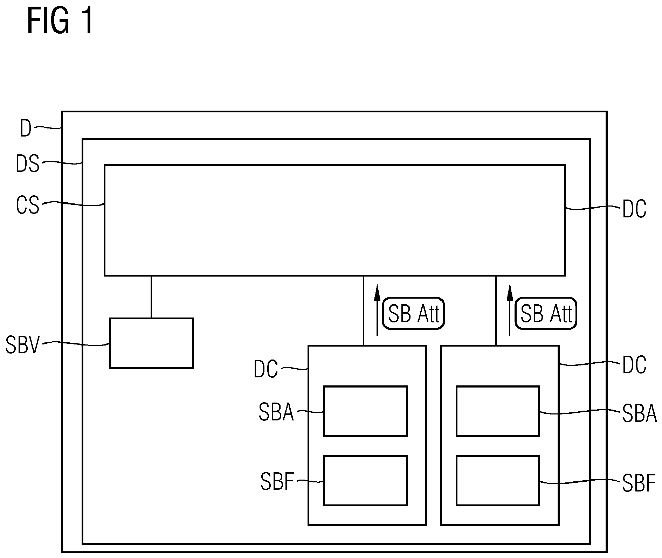

Die Figur 1 zeigt eine Vorrichtung DS, beispielsweise ein Steuergerät D - wie es in einer industriellen Automatisierungsumgebung verwendbar ist, das zwei Gerätekomponenten DC enthält, z.B. einen Netzwerkschnittstelle bzw. Netzwerkkommunikationschip bzw. Netzwerkkommunikationsmodul, einen Smart-Sensor Chip, ein Hardware Security Modul (HSM), eine Grafikkarte, eine FPGA-Beschleuniger, ein IO-Modul, ein PID-Regler-Modul, ein Antriebssteuermodul. Diese stellen jeweils, bei einer erfolgreichen geschützten ersten Betriebsphase, insbesondere einer Startphase (Secure Boot), eine kryptographisch geschützte Integritätsattestierungsinformation SB Att bereit. Diese wird erstellt und/oder initiiert durch eine Attestierungseinheit SBA und bestätigt, dass die Gerätekomponenten ihr Secure Boot SBF jeweils erfolgreich durchgeführt haben. Der Schutz der Betriebsphase kann durch Beschränkungen (z.B. Netzwerkschnittstelle, Service-Schnittstelle und/oder IO-Schnittstelle in der ersten Betriebsphase noch deaktiviert, welche später z.B. in der weiteren regulären Betriebsphase aktiviert wird) erreicht werden.

Secure Boot wird oftmals auch als "Verified Boot" bezeichnet. Hierbei prüft eine Komponente der Boot-Kette (z.B. Bootloader) die nächste Stufe (z.B. Kernel) auf Integrität und Authentizität, typischerweise unter Verwendung von digitalen Signaturen.

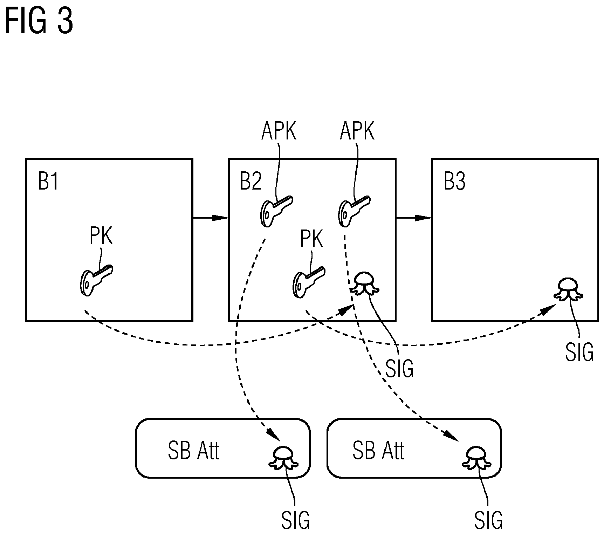

Wie in Figur 3 dargestellt, führt das Secure Boot des "eigentlichen" Steuergerätes, z.B. eines embedded Linux Systems, selbst ein Secure Boot SBV durch. Dabei wird bei jeder Stufe B1, B2, B3 des Boot-Prozesses jeweils die Integrität des Codes der nächsten Boot-Stufe überprüft, bevor dieser ausgeführt wird. Hierzu prüft eine Integritätsüberprüfungseinheit bzw. Prüfeinheit, die mit CS bezeichnet ist, ob eine Integritätsattestierungsinformation SB Att von den jeweiligen Gerätekomponenten unter Verwendung von Verifikationsschlüsseln APK und digitalen Signaturen SIG vorliegt. Es ist möglich, durchzuführende Integritäts- und Authentizitätschecks von Software bei einem Secure Boot Vorgang vorab zu definieren. Diese Prüfungen betreffen vor allem die logische Konfiguration des Secure Boot-Vorgangs (z.B. welche Verifikationsschlüssel PK für die Signaturprüfung zulässig sind; ob Firmware-Anteile zu entschlüsseln sind). Der Boot-Loader für die zweite Stufe B2, der die Funktion einer Überwachungseinheit übernimmt, überprüft zusätzlich die Secure-Boot-Attestierungen bzw. Integritätsattestierungsinformation SB Att der Gerätekomponenten DC. Weiterhin überprüft er die Signatur SIG des Boot-Loaders für die dritte Stufe B3. Der Boot-Loader für die dritte Stufe wird nur gestartet, wenn eine gültige, aktuelle Integritätsattestierungsinformation SB Att der Gerätekomponenten DC vorliegt. Mit anderen Worten ausgedrückt, es liegt ein positives Prüfergebnis vor, woraufhin eine weitere Betriebsphase des Steuergeräts D z.B. eine reguläre operative Betriebsphase eingeleitet werden kann. Eine Steuerungsfunktion und/oder eine Ein-/Ausgabeschnittstelle kann freigegeben oder gestartet oder aktiviert werden, wenn das Steuergerät in dem weiteren Betriebszustand in Betrieb ist, welcher in der Regel einen regulären Betriebszustand repräsentiert. Wenn das Prüfungsergebnis negativ ist, kann eine Alarmnachricht, ein Neustart, ein Löschen von Daten, ein Leuchten einer Diode DD und/oder ein Herstellen einer Schaltverbindung S für eine Folgemaßnahme eingeleitet werden.

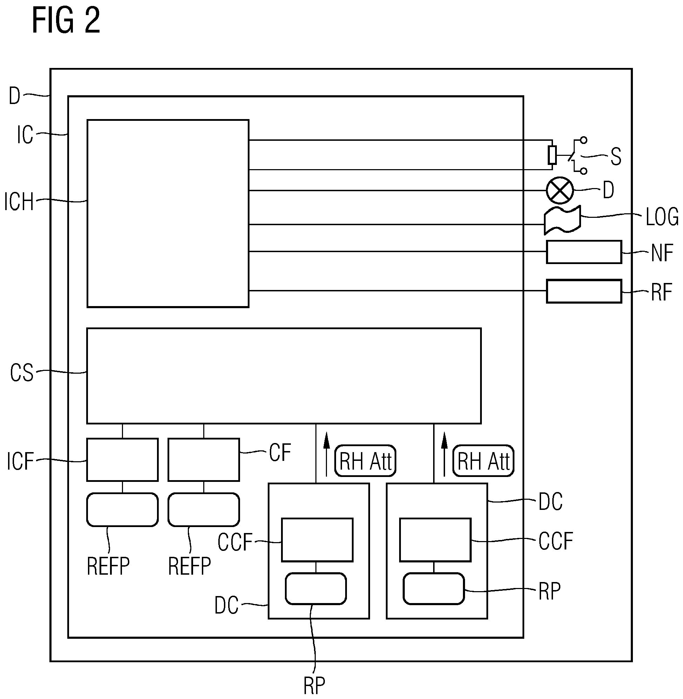

Die Figur 2 zeigt Funktionseinheiten des Steuergerätes D mit einer Laufzeit-Geräteintegritäts-Selbstüberprüfung. Die in Figur 1 bezeichnete Vorrichtung DS ist in Figur 2 mit IC bezeichnet. Beide Vorrichtungen weisen ähnliche und/oder identische Funktionalitäten auf. Die Ausführungsformen und Vorgehensweisen, die zu Figur 1 und 3 beschrieben sind, können analog auf die Ausführungsformen, die in Figur 2 beschrieben sind angewandt werden. In Figur 1 repräsentiert die erste Betriebsphase eine Startphase und die weitere Betriebsphase eine reguläre operative Betriebsphase bzw. Betriebsmodus. In der Figur 2 repräsentiert die erste Betriebsphase eine reguläre operative Betriebsphase oder eine Betriebsphase im Testmodus, die geschützt ist, und die weitere Betriebsphase auch eine reguläre operative Betriebsphase, die geschützt oder ungeschützt sein kann. Gemäß Figur 2 verfügen die Gerätekomponenten DC jeweils über eine Komponente, aufweisend eine Laufzeitüberprüfungsfunktion, und stellen eine Laufzeitintegritätsattestierungsinformation RH Att der jeweiligen Gerätekomponente manipulationsgeschützt bereit, wobei die Laufzeitintegritätsattestierungsinformation RH Att von einer Attestierungseinheit CCF nach Abgleich mit einer Referenz-Vorgabe RP erstellt und/oder initiiert wird, d.h. ggf. von einer weiteren nicht dargestellten dritten Einheit zur Erstellung der Laufzeitintegritätsattestierungsinformation RH Att initiiert und erhalten wird. Insbesondere kann die Laufzeitintegritätsattestierungsinformation RH Att als Bestätigung durch eine kryptographische Prüfsumme (Message Authentication Code, digitale Signatur) geschützt sein. Die Integritätsattestierungsinformation SB Att bzw. RH Att können zeit- und/oder ereignisgesteuert ermittelt und/oder erstellt werden. Vorzugsweise ist darin ein Aktualitätsparameter enthalten (z.B. ein Zähler, z.B. ein Boot Cycle Count, ein von der Prüfeinheit CS oder einer Überwachungseinheit ICH vorgegebener Challenge-Wert oder eine Zeitinformation), sodass keine zurückliegenden, wiedereingespielten Laufzeitintegritätsattestierungsinformation RH Att als gültig akzeptiert werden.
Während einer speziellen geschützten Betriebsphase, vorzugsweise eine Startphase (Boot-Phase), wird die Integrität durch die Prüffunktionen ICF, CF anhand einer Referenzinformation REFP sicherstellt.

Weiterhin werden durch die Überwachungseinheit ICH Geräteschnittstellen, z.B. ein Schalter S, eine Netzwerkschnittstelle NIF, Ein-/Ausgabeschnittstelle IOF, Diode DD, ein Mitprotokollieren in einem Logfile LOG, eine Folgemaßnahmefunktion RF durch deren Aktivierung bzw. Deaktivierung gesteuert, damit sichergestellt ist, dass diese nicht von einem Angreifer manipuliert werden können, der über eine solche Schnittstelle auf das Gerät zugreift.
Neben der eigenen Integritätsprüfung durch die Prüffunktionen CF, ICF durch Abgleich mit einer Referenzinformation REFP wird die von einer Gerätekomponente DC (im Beispiel sind zwei Gerätekomponenten DC gezeigt) bereitgestellte Laufzeitintegritätsattestierungsinformation RH Att durch eine Prüfeinheit CS geprüft.

In einer Ausführungsform wird die Laufzeitintegritäts-Referenzinformation unter Verwendung eines nicht in den Figuren dargestellten Trusted Platform Modules (TPM), das in die Attestierungseinheit CCF integriert sein kann, gebildet und kryptographisch geschützt. Dazu werden Integritäts-Messwerte ermittelt und ein PCR-Register des TPMs davon abhängig aktualisiert. Der Wert wird vom TPM digital signiert bzw. attestiert, d.h. das TPM-Modul bildet eine kryptographisch geschützte, digital signierte Datenstruktur, die den Inhalt des PCR-Registers bestätigt. Anstatt eines TPM kann auch ein Secure Element, z.B. ein separater Kryptochip oder ein integriertes Secure Element wie z.B. ein separater Security-Core eines Multi-Core-Systems, ein Trusted Execution Environment (TEE) oder Security Guard Extensions (SGX) verwendet werden.

Die oben genannten Integritätsattestierungsinformationen SB Att und RH Att sind ähnlich oder gar gleich. SB Att drückt eine Integritätsattestierungsinformation in der Startphase des Gerätes und RH Att eine Integritätsattestierungsinformation während der Laufzeit, in der Regel in der regulären operativen Betriebsphase bzw. ggf. im Testmodus nach einer Startphase aus.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Vorrichtung (DS; IC) für eine Integritätsüberprüfung einer oder mehrerer Gerätekomponenten, welche an ein insbesondere in einer industriellen Automatisierungsumgebung verwendbares Gerät (D) integriert oder lösbar gekoppelt sind, aufweisend:
- eine Prüfeinheit (CS), die dazu ausgelegt ist, während einer geschützten ersten Betriebsphase des Gerätes zumindest eine kryptographisch geschützte Integritätsattestierungsinformation (SB Att; RH Att) zu prüfen, welche jeweils von der einen oder mehreren Gerätekomponenten während derer geschützten Betriebsphasen erstellt und/oder initiiert ist,
und
- eine Überwachungseinheit (ICH), die dazu ausgelegt ist, bei positiven Prüfungsergebnis eine weitere Betriebsphase des Geräts einzuleiten.

2. Vorrichtung nach dem vorhergehenden Anspruch **dadurch gekennzeichnet, dass**, wenn das Prüfungsergebnis negativ ist, eine Alarmnachricht, ein Neustart, ein Löschen von Daten, ein Leuchten einer Diode (DD) und/oder ein Herstellen einer Schaltverbindung (S) für eine Folgemaßnahme eingeleitet werden kann.

3. Vorrichtung nach einem der vorhergehenden Ansprüche, **dadurch gekennzeichnet dass**, eine Steuerungsfunktion und/oder eine Ein-/Ausgabeschnittstelle freigegeben oder gestartet oder aktiviert ist oder werden kann, wenn die Vorrichtung in einem weiteren Betriebszustand in Betrieb ist, welcher einen regulären Betriebszustand repräsentiert.

4. Vorrichtung nach einem der vorhergehenden Ansprüche **dadurch gekennzeichnet, dass** der Schutz der Betriebsphase durch Beschränkungen erreicht werden kann.

5. Vorrichtung nach einem der vorhergehenden Ansprüche **dadurch gekennzeichnet, dass** Integritätsattestierungsinformation (SB Att; RH Att) unter Verwendung eines Trusted Platform Module ermittelt und/oder erstellt und kryptographisch geschützt werden kann.

6. Integritätsüberprüfungseinheit (CS) für eine Gerätekomponente (DC), welche an ein insbesondere in einer industriellen Automatisierungsumgebung verwendbares Gerät (D) integriert oder lösbar gekoppelt ist, **dadurch gekennzeichnet, dass** diese dazu ausgelegt ist, während einer geschützten Betriebsphasen eine kryptographisch geschützte Integritätsattestierungsinformation (SB Att; RH Att) zu erstellen und/oder zu initiieren, und diese dem Gerät zur Integritätsüberwachung/-prüfung bereitzustellen.

7. Integritätsüberprüfungseinheit, nach dem vorhergehenden Anspruch **dadurch gekennzeichnet, dass** die Integritätsattestierungsinformation (SB Att; RH Att) zeit- und/oder ereignisgesteuert ermittelt und/oder erstellt werden kann.

8. Verfahren zur Integritätsüberprüfung einer oder mehrerer Gerätekomponenten (DC), welche an ein insbesondere in einer industriellen Automatisierungsumgebung verwendbares Gerät (D) integriert oder lösbar gekoppelt sind, aufweisend folgende Schritte:
- Prüfen zumindest einer kryptographisch geschützte Integritätsattestierungsinformation (SB Att) während einer (geschützten) ersten Betriebsphase des Gerätes, wobei die Integritätsattestierungsinformation (SB Att) jeweils von der einen oder mehreren Gerätekomponenten während derer geschützten Betriebsphasen erstellt und/oder initiiert wird,
und
- Einleiten einer weiteren Betriebsphase des Geräts bei positivem Prüfungsergebnis.

9. Verfahren nach dem vorhergehenden Anspruch, **dadurch gekennzeichnet, dass** die genannten Schritte wiederholt werden, wenn das Gerät in der weiteren Betriebsphase in Betrieb ist.

10. Verfahren nach dem vorhergehenden Anspruch, **dadurch gekennzeichnet, dass** die Wiederholung der Schritte zeit- und/oder ereignisgesteuert ausgelöst wird.

11. Verfahren nach einem der vorhergehenden Verfahrensansprüche **dadurch gekennzeichnet, dass**, wenn das Prüfungsergebnis negativ ist, eine Alarmnachricht, ein Neustart, ein Löschen von Daten, ein Leuchten einer Diode (DD) und/oder ein Herstellen einer Schaltverbindung (S) für eine Folgemaßnahme eingeleitet wird.

12. Verfahren nach einem der vorhergehenden Verfahrensansprüche **dadurch gekennzeichnet, dass** die geschützte Betriebsphase während einer Startphase des Geräts abläuft.

13. Verfahren nach einem der vorhergehenden Verfahrensansprüche **dadurch gekennzeichnet, dass** die geschützte Betriebsphase während einer regulären Betriebsphase des Geräts abläuft.

14. Verfahren nach einem der vorhergehenden Verfahrensansprüche **dadurch gekennzeichnet, dass** der Schutz der Betriebsphase durch Beschränkungen erreicht wird.

15. Verfahren nach einem der vorhergehenden Verfahrensansprüche **dadurch gekennzeichnet, dass** Integritätsattestierungsinformation (SB Att; RH Att) unter Verwendung eines Trusted Platform Module ermittelt und/oder erstellt und kryptographisch geschützt wird.
